# EUROPEAN PATENT SPECIFICATION

(11) **EP 3 398 435 B1**
(45) Date of publication and mention of the grant of the patent: **11.03.2020**
(21) Application number: 17738438.5
(22) Date of filing: 11.01.2017
(51) Int. Cl.: A01N 29/02, A01M 7/00, A01N 25/06, A01P 7/04

(54) **INSECT PEST REPELLENT**
INSEKTENSCHÄDLINGSCHUTZMITTEL
RÉPULSIF CONTRE LES INSECTES NUISIBLES

(30) Priority: 14.01.2016 JP 2016005417
(43) Date of publication of application: 07.11.2018
(73) Proprietor: FUMAKILLA LIMITED, Tokyo 101-8606 (JP)
(72) Inventor: HONDA Kazuyuki, Hatsukaichi-shi Hiroshima 739-0494 (JP); AMAGAI Mami, Hatsukaichi-shi Hiroshima 739-0494 (JP); MATSUMOTO Takenori, Shizuoka-shi Shizuoka 424-8631 (JP); YABE Hiromasa, Shizuoka-shi Shizuoka 424-8631 (JP); SHIRATORI Shinya, Shizuoka-shi Shizuoka 424-8631 (JP)
(74) Representative: Agasse, Stéphane
(86) International application number: PCT/JP2017/000645
(87) International publication number: WO 2017/122684

(56) References cited:
- WO-A1-2013/183754
- WO-A2-2011/084447
- JP-A- 2009 227 662
- JP-A- 2013 514 444
- JP-A- 2013 514 450
- JP-A- 2015 129 018
- US-A1- 2011 144 216

## Description

### TECHNICAL FIELD

The present invention relates to insect pest control agents for controlling a variety of insect pests.

### BACKGROUND ART

An insect pest control aerosol that is an aerosol container containing an insect pest control agent has conventionally been used to control insect pests, such as cockroaches. The insect pest control agent for such use is typically blended with a chemical agent containing an insecticidal component. It is not considered that the insecticidal component has no harmful effect on the human body. Taking this into account, users actually hesitate or completely avoid using the insect pest control aerosol at, for example, a place where foods or dishes are kept, a place where an infant or very young child is present, etc.

Under these circumstances, an insect pest control aerosol containing a chlorofluorocarbon (CFC) substitute that has a cooling effect and substantially no harmful effect on the human body, instead of a chemical agent containing an insecticidal component, has in recent years been used (see, for example, PATENT DOCUMENTs 1 and 2). PATENT DOCUMENTs 1 and 2 each describe an insect pest control aerosol that is an aerosol container containing a CFC substitute. When the user pushes down a spray cap to spray the CFC substitute from a nozzle onto an insect pest so that the CFC substitute adheres to the insect pest, the insect pest is instantaneously cooled by heat removal by vaporization of the CFC substitute, and the activity of the insect pest is thereby inhibited or reduced.

### CITATION LIST

### PATENT DOCUMENT

PATENT DOCUMENT 1: Japanese Patent Publication No. 2009-227662
PATENT DOCUMENT 2: Japanese Patent Publication No. 2014-79255

Further relevant state of the art documents for this technical field are US 2011/144216 A1 and WO 2011/084447 A2.

### SUMMARY OF THE INVENTION

### TECHNICAL PROBLEM

Incidentally, by the use of a CFC substitute instead of a conventional chemical agent containing an insecticidal component as an active component for controlling insect pests as described above, an insect pest control agent that has substantially no harmful effect on the human body can be advantageously provided.

However, in actual situations in which the insect pest control agent is used, an insect pest suddenly appears and quickly moves in most cases. In addition, the user does not want to approach an insect pest, which psychological strain or pressure makes it difficult for the user to accurately apply the insect pest control agent to the insect pest so that the insect pest control agent adheres to the insect pest. Furthermore, as soon as the insect pest control agent adheres to an insect pest, the insect pest may reflexively run away. Conventional insecticidal components directly act on the nervous system of an insect pest. Therefore, when the conventional insecticidal component adheres to any portion of an insect pest, that insect pest will be quickly affected. CFC substitutes have a very low direct toxicity to insect pests. Therefore, the adhesion of the CFC substitute to an insect pest is necessary but not sufficient. The role of the CFC substitute is fulfilled only when the CFC substitute adheres to an insect pest and successfully cools that insect pest. Therefore, unless the CFC substitute accurately adheres to an appropriate portion of an insect pest, the activity reduction effect is not likely to be sufficiently achieved.

An insect pest itself has a certain quantity of heat. Therefore, even when an insect pest control agent such as that described in PATENT DOCUMENT 1 or 2 adheres to an insect pest, then if the amount of the agent adhering to that insect pest is small, the activity reduction effect may not be obtained. This may impress upon users that the cooling effect of the insect pest control agent is not effective, which may prevent such safe insect pest control agents from becoming popular.

With the above in mind, the present invention has been made. It is an object of the present invention to provide an insect pest control agent that has a composition which has substantially no harmful effect on the human body, and can exhibit a quick and sufficient activity reduction effect on an insect pest.

### SOLUTION TO THE PROBLEM

To achieve the above object, the present invention provides an insect pest control agent that contains cis-1,1,1,4,4,4-hexafluoro-2-butene, which has substantially no harmful effect on the human body.

An insect pest control agent for adhesion to an insect pest according to a first aspect of the present invention, contains cis-1,1,1,4,4,4-hexafluoro-2-butene.

With this feature, cis-1,1,1,4,4,4-hexafluoro-2-butene exhibits an activity reduction effect on an insect pest when adhering to that insect pest. The insect pest activity reduction effect of cis-1,1,1,4,4,4-hexafluoro-2-butene is a motor function reduction effect specific to cis-1,1,1,4,4,4-hexafluoro-2-butene, but not a cooling effect. The motor function reduction effect of cis-1,1,1,4,4,4-hexafluoro-2-butene is quickly exhibited.

Note that cis-1,1,1,4,4,4-hexafluoro-2-butene has substantially no harmful effect on the human body as with CFC substitutes, and therefore, can be used as an insect pest control agent safe for the human body.

In a second aspect of the present invention, the insect pest control agent according the first aspect of the present invention further contains a cooling CFC substitute for cooling an insect pest by vaporizing and removing heat from the insect pest.

Specifically, the activity of an insect pest is inhibited or reduced by cis-1,1,1,4,4,4-hexafluoro-2-butene before the cooling effect of the cooling CFC substitute is exhibited. Thereafter, the insect pest is cooled by heat removal by vaporization of the cooling CFC substitute, and is thereby controlled. In addition, since the insect pest activity reduction effect of cis-1,1,1,4,4,4-hexafluoro-2-butene is quickly exhibited, the insect pest control agent is subsequently more easily applied to the insect pest so that an additional amount of the insect pest control agent adheres to the insect pest, resulting in an increase in the reliability of insect pest control.

Furthermore, the cooling CFC substitute also functions as a propellant, and therefore, a propellant such as dimethyl ether may not be blended.

In a third aspect of the present invention, the insect pest control agent according the first aspect of the present invention further contains a propellant, and is contained in an aerosol container.

With this feature, the insect pest control agent is an aerosol formulation, and therefore, can be easily applied to an insect pest so that the active component thereof adheres to that insect pest. In addition, cis-1,1,1,4,4,4-hexafluoro-2-butene has low flammability, and therefore, the insect pest control agent can be more safely sprayed from the aerosol container.

Note that examples of the propellant include dimethyl ether, LPG, and CFC substitutes. Any suitable one or more of these propellants can be used.

In a fourth aspect of the present invention, the propellant contained in the insect pest control agent according the third aspect of the present invention is dimethyl ether.

With this feature, the insect pest cooling effect of dimethyl ether is exhibited in combination with the cooling effect of the cooling CFC substitute, resulting in a further improvement in the insect pest activity reduction effect.

In a fifth aspect of the present invention, the content of the cis-1,1,1,4,4,4-hexafluoro-2-butene in the insect pest control agent according the first aspect of the present invention is not smaller than 0.74 w/v%.

With this feature, the cis-1,1,1,4,4,4-hexafluoro-2-butene content is not smaller than 0.74 w/v%, and therefore, the activity reduction effect of the insect pest control agent is significantly enhanced when the insect pest control agent adheres to an insect pest, particularly within 10 seconds after the adhesion.

In a sixth aspect of the present invention, the content of the cis-1,1,1,4,4,4-hexafluoro-2-butene in the insect pest control agent according the first aspect of the present invention is not greater than 10 w/v%.

With this feature, when the insect pest control agent adheres to, for example, a flooring, cleanness is maintained at a higher level, resulting in an improvement in the user's feeling. In addition, the cost of the insect pest control agent can be reduced while keeping sufficient efficacy thereof.

### ADVANTAGES OF THE INVENTION

According to the first aspect of the present invention, cis-1,1,1,4,4,4-hexafluoro-2-butene is contained, and therefore, the insect pest control agent has a composition that has substantially no harmful effect on the human body, and can exhibit a quick and sufficient activity reduction effect on an insect pest.

According to the second aspect of the present invention, a cooling CFC substitute is contained, and therefore, an insect pest can be effectively controlled by the cooling effect of the cooling CFC substitute with the activity of that insect pest being inhibited or reduced by cis-1,1,1,4,4,4-hexafluoro-2-butene.

According to the third aspect of the present invention, the insect pest control agent further contains a propellant and is contained in an aerosol container, and therefore, the active component thereof can more easily adhere to an insect pest. In addition, cis-1,1,1,4,4,4-hexafluoro-2-butene has low flammability, and therefore, the insect pest control agent can be more safely sprayed from the aerosol container.

According to the fourth aspect of the present invention, the propellant is dimethyl ether, and therefore, when the insect pest control agent adheres to an insect pest, the cooling effect of dimethyl ether can also be exhibited on that insect pest. Therefore, the insect pest activity reduction effect can be further enhanced.

According to the fifth aspect of the present invention, the cis-1,1,1,4,4,4-hexafluoro-2-butene content is not smaller than 0.74 w/v%, and therefore, the activity reduction effect can be particularly quickly exhibited.

According to the sixth aspect of the present invention, the cis-1,1,1,4,4,4-hexafluoro-2-butene content is not greater than 10 w/v%, and therefore, the cost of the insect pest control agent can be reduced while keeping sufficient efficacy thereof. In addition, the user's feeling can be improved.

### BRIEF DESCRIPTION OF THE DRAWINGS

[FIG. 1] FIG. 1 is a diagram for describing a situation in which an insect pest control agent according to an embodiment is used, and showing Test Example 1.
[FIG. 2] FIG. 2 is a diagram similar to FIG. 1 and showing Test Example 2.

### DESCRIPTION OF EMBODIMENTS

Embodiments of the present invention will now be described in detail with reference to the accompanying drawings. Note that the description of preferable embodiments below are merely illustrative and are in no way intended to limit the present invention, its application, or uses.

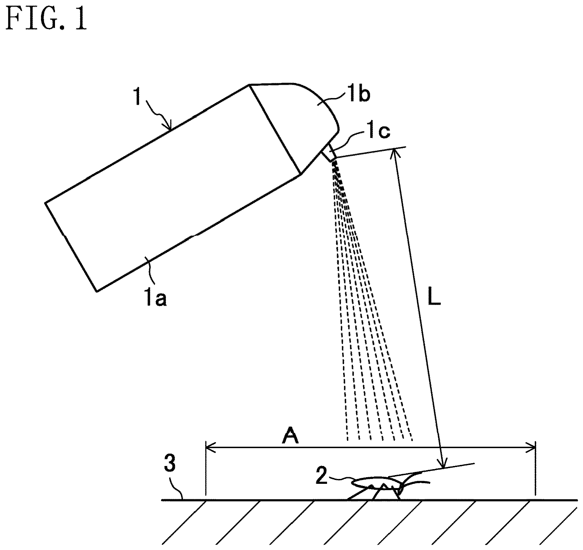

FIG. 1 is a diagram for describing a situation in which an insect pest control agent according to an embodiment of the present invention is used. The insect pest control agent of this embodiment is contained in an aerosol container 1. The insect pest control agent of this embodiment is sprayed from the aerosol container 1 onto an insect pest 2 so that the insect pest control agent adheres to the insect pest 2. The aerosol container 1, which may be a commonly used one, has a container body 1a that is a pressure-resistant container, and a spray cap 1b provided on top of the container body 1a. A valve (not shown) equipped with a stem that moves vertically is provided at an upper portion of the container body 1a. The valve is opened by the stem being pushed down. In the open state, the inside of the stem is in communication with the inside of the container body 1a. A passage (not shown) that is in communication with the inside of the stem is formed in the spray cap 1b. A nozzle 1c provided in the spray cap 1b is coupled to a downstream end portion of the passage. Note that the configuration of the aerosol container 1 is not limited to that described above. Various aerosol containers may be used.

The insect pest control agent contains cis-1,1,1,4,4,4-hexafluoro-2-butene, a cooling CFC substitute for cooling an insect pest by vaporizing and removing heat from the insect pest, and a propellant for spraying the cooling CFC substitute and the compound cis-1,1,1,4,4,4-hexafluoro-2-butene from the aerosol container 1. The compound cis-1,1,1,4,4,4-hexafluoro-2-butene, which is a fluorine compound, has a boiling point of 33°C and a low flammability. The compound cis-1,1,1,4,4,4-hexafluoro-2-butene has substantially no harmful effect on the human body as with CFC substitutes, and therefore, can be used as an insect pest control agent safe for the human body.

Examples of the cooling CFC substitute include hydrofluorocarbons and hydrofluoroolefins, which cool the insect pest 2 by vaporizing and removing heat from the insect pest 2 when adhering to the insect pest 2, and thereby inhibit or reduce the activity of the insect pest 2. These cooling CFC substitutes have chemical properties that allow them to have a very low flammability. In this embodiment, examples of the cooling CFC substitute include HFC-152a (1,1-difluoroethane) (chemical formula: CHF₂CH₃, CAS No. 75-37-6), HFC-134a (1,1,1,2-tetrafluoroethane) (chemical formula: CH₂FCF₃, CAS No. 811-97-2), HFO-1234yf (2,3,3,3-tetrafluoropropene) (chemical formula: CF₃CF=CH₂, CAS No. 754-12-1), and HFO-1234ze (1,3,3,3-tetrafluoropropene) (chemical formula: CF₃CH=CFH, CAS No. 1645-83-6). HFO-1234yf and HFO-1234ze have chemical properties that allow them to have a lower global warming potential (GWP) than that of HFC-152a, and a lower flammability than that of HFC-152a. Furthermore, HFO-1234ze has no flammability, i.e., is non-flammable. Therefore, as the cooling CFC substitute, HFO-1234yf and HFO-1234ze are preferably used. In particular, taking its chemical properties into account, HFO-1234ze is more preferable.

Examples of the propellant include dimethyl ether, normal butane, isobutane, propane, and liquefied petroleum gas (LPG) that is a mixture thereof. Note that these propellants have flammability, and therefore, the flammability increases with an increase in the propellant content. Therefore, the propellant is preferably blended such that the cooling CFC substitute content is not lower than 75 vol%. If the cooling CFC substitute content is lower than 75 vol%, a flame is likely to occur and burn backward when the insect pest control agent is directly sprayed to fire, etc. Alternatively, hydrocarbons having five or six carbon atoms which have a high boiling point, such as normal pentane, isopentane, and normal hexane, may be blended. These hydrocarbons are highly flammable, and the mixing ratios thereof are preferably low. In addition, a compressed gas of nitrogen gas, compressed air, carbon dioxide, or the like may be blended. The cooling CFC substitute also functions as a propellant, and therefore, no propellant may be blended. In other words, even when a propellant is not blended, the insect pest control agent can be used as an aerosol.

The contents of repellents, other than HFC-152a, for the insect pest control agent, will now be discussed. For example, the content of HFO-1234ze can be reduced compared to HFC-152a, taking into account the problem that the flammability increases, i.e., a flame is likely to occur and burn backward. However, if the HFO-1234ze content is lower than 50 vol%, the above problem is likely to occur. Therefore, the HFO-1234ze content is preferably not lower than 50 vol%. That is, the HFO-1234ze content is 50-100 vol%.

The insect pest control agent of this embodiment is not left at a place where the agent has been sprayed, and does not contain an insecticidal component, and therefore, is suitable for indoor use. Examples of insect pests to be controlled by the insect pest control agent of this embodiment include cockroaches of the German cockroach (Blattella germanica), smokybrown cockroach (Periplaneta fuliginosa), Australian cockroach (Periplaneta australasiae), brown cockroach (Periplaneta brunnea), Japanese cockroach (Periplaneta japonica), etc., spiders of the redback spider (Latrodectus hasseltii), joro spider (Nephila clavata), etc., centipedes, ants of the Pristomyrmex punctatus, etc., shield bugs, lice, and bedbugs. Examples of insect pests to be controlled by the insect pest control agent of this embodiment also include flying insects, including flies of the housefly (Musca domestica), Fanniidae, Sarcophaga peregrina, Aldrichina grahami, common fruit fly (Drosophila melanogaster), drain fly (Psychodidae), phorid fly (Phoridae), etc., mosquitoes of the Culex pipiens pallens, Asian tiger mosquito (Aedes albopictus), etc., bees, and moths of the fall webworm (Hyphantria cunea), etc. Furthermore, the insect pest control agent of this embodiment can exhibit the control effect on insect pests resistant to pyrethroids. This is because the insect pest control agent of this embodiment does not contain an insecticidal component. The insect pest control agent can be used at various places, such as homes including kitchens, etc., where foods or dishes are kept, and rooms where an infant or very young child is present, restaurants, and hospitals.

The insect pest control agent may additionally contain, for example, a natural essential oil, such as citronella oil, thyme oil, peppermint oil, lavender oil, coriander oil, cedar wood oil, fennel oil, chamomile oil, cinnamon oil, pimento oil, geranium oil, cumin oil, Japanese peppermint oil, clove oil, hiba oil, or lemongrass oil. These components may be used alone or in combination, depending on the application.

The insect pest control agent may also additionally contain 1,1,1,2,2,3,4,5,5,5-decafluoropentane (trade name: Vertrel XF, manufactured by Du Pont-Mitsui Fluorochemicals Co., Ltd.), Novec 7100 or Novec 7200, manufactured by 3M Japan Limited, etc., which are a non-flammable solvent. Novec 7100 is a mixture of methyl nonafluorobutyl ether (chemical formula: CF₃(CF₂)₃OCH₃, CAS No. 163702-07-6), and methyl nonafluoroisobutyl ether (chemical formula: CF₂HOCH₂CF(CF₃)₂, CAS No. 163702-08-7). Novec 7200 is a mixture of ethyl nonafluorobutyl ether (chemical formula: (CF₂)₃CF₃OCH₂CH₃, CAS No. 163702-05-4), and ethyl nonafluoroisobutyl ether (chemical formula: CF₂CF(CF₃)₂OCH₂CH₃, CAS No. 163702-06-5). A mixture containing these at any suitable ratio may be used.

The use of such a non-flammable solvent causes the insect pest control agent to be less flammable. The above solvents have a low boiling point, and vaporize at room temperature, and therefore, are less likely to remain after adhering to a flooring, etc. When such a solvent is used indoors, substantially no trace of the sprayed solvent is left. The solvents also highly easily adhere to and permeate insect pests. In particular, 1,1,1,2,2,3,4,5,5,5-decafluoropentane itself has a cooling effect, and therefore, can further enhance the insect pest cooling effect of the insect pest control agent.

The insect pest control effect of the insect pest control agent may also be further enhanced by adding, to the insect pest control agent, a chemical agent that can highly easily adhere to and permeate or suffocate insect pests. Examples of such a chemical agent include hydrocarbons such as aliphatic hydrocarbons, aromatic hydrocarbons, and alicyclic hydrocarbons, alcohols such as ethanol, isopropyl alcohol, and methanol, esters, plant oils, animal oils, and water.

Other chemical agents, etc., may be added if they do not impair the effect of reducing the activity of insect pests, or safety to the human body.

### Examples

Examples of the present invention will now be described. The present invention is not construed as being limited to the examples.

### (Test Example 1)

As shown in Table 1, Test Example 1 was a test for investigating differences in efficacy between Comparative Example 1 and Examples 1-7.

**Table 1**

| | cis-1,1,1,4,4,4-hexafluoro-2-butene content | Test No. | Evaluation | |
|---|---|---|---|---|
| | (w/v%) | | Immediately after spraying | 10 seconds after spraying |
| Comparative Example 1 | 0.00 | 1 | ○ | Δ |
| | | 2 | Δ | Δ |
| | | 3 | ○ | ○ |
| | | 4 | ○ | Δ |
| | | 5 | ⊚ | ○ |
| Example 1 | 0.65 | 1 | ○ | Δ |
| | | 2 | ○ | ○ |
| | | 3 | ○ | Δ |
| | | 4 | ○ | Δ |
| | | 5 | ○ | ○ |
| Example 2 | 0.74 | 1 | ○ | ○ |
| | | 2 | ○ | ○ |
| | | 3 | ○ | ○ |
| | | 4 | ○ | ○ |
| | | 5 | ⊚ | ○ |
| Example 3 | 0.83 | 1 | ⊚ | ○ |
| | | 2 | ⊚ | ⊚ |
| | | 3 | ○ | ○ |
| | | 4 | ○ | Δ |
| | | 5 | ⊚ | ○ |
| Example 4 | 0.91 | 1 | ○ | ○ |
| | | 2 | ○ | ○ |
| | | 3 | ⊚ | ⊚ |
| | | 4 | ⊚ | ⊚ |
| | | 5 | ⊚ | ○ |
| Example 5 | 1.00 | 1 | ⊚ | ○ |
| | | 2 | ⊚ | ⊚ |
| | | 3 | ⊚ | ⊚ |
| | | 4 | ○ | ○ |
| | | 5 | ○ | ○ |
| Example 6 | 5.00 | 1 | ⊚ | ○ |
| | | 2 | ⊚ | ○ |
| | | 3 | ⊚ | ⊚ |
| | | 4 | ⊚ | ⊚ |
| | | 5 | ⊚ | ⊚ |
| Example 7 | 10.00 | 1 | ⊚ | ⊚ |
| | | 2 | ⊚ | ⊚ |
| | | 3 | ⊚ | ⊚ |
| | | 4 | ⊚ | ⊚ |
| | | 5 | ⊚ | ⊚ |

| | | | | |
|---|---|---|---|---|
| "Double circle": a test insect did not move its legs, etc., or did not move around "Open circle": compared to before spraying, there was a significant reduction in the movement speed of a test insect "Open triangle": compared to before spraying, there was not a significant difference in the movement speed of a test insect, and an abnormal motion was observed in the test insect | | | | |

Testing was performed by a method shown in FIG. 1. Initially, aerosol containers 1 containing respective insect pest control agents according to Comparative Example 1 and Examples 1-7, were prepared. An insect pest 2 that was to be tested was put on a flooring 3. The insect pest 2 was a single female adult cockroach of the smokybrown cockroach. The insect pest 2 was allowed to freely move in a square region (the length of each side is A) on the top surface of the flooring 3. The length A was 30 cm. The aerosol container 1 was positioned diagonally above the insect pest 2, with a distance L between the open end of the nozzle 1c and the insect pest 2 being 60 cm. A state of the insect pest 2 was observed immediately after spraying and 10 seconds after spraying. The time for which the insect pest control agent was sprayed was 4 seconds, and the amount of the insect pest control agent that was sprayed for that time was 16 ml, for every test insect. The temperature of a room where the test was conducted was 23°C.

The insect pest control agent of Comparative Example 1 contained HFO-1234ze and dimethyl ether (DME), and did not contain cis-1,1,1,4,4,4-hexafluoro-2-butene. The HFO-1234ze content was 180 ml (70 w/v%), the content DME was 120 ml (27 w/v%), and the total of them was 300 ml. Note that "w/v%" refers to weight/volume percent.

The insect pest control agent of Example 1 contained HFO-1234ze, DME, and cis-1,1,1,4,4,4-hexafluoro-2-butene. The HFO-1234ze content was 125.91 ml, the DME content was 103.02 ml, the cis-1,1,1,4,4,4-hexafluoro-2-butene content was 1.07 ml (0.65 w/v%), and the total of them was 230 ml.

The insect pest control agent of Example 2 contained HFO-1234ze, DME, and cis-1,1,1,4,4,4-hexafluoro-2-butene. The HFO-1234ze content was 125.83 ml, the DME content was 102.95 ml, the cis-1,1,1,4,4,4-hexafluoro-2-butene content was 1.21 ml (0.74 w/v%), and the total of them was 230 ml.

The insect pest control agent of Example 3 contained HFO-1234ze, DME, and cis-1,1,1,4,4,4-hexafluoro-2-butene. The HFO-1234ze content was 125.75 ml, the DME was 102.89 ml, the cis-1,1,1,4,4,4-hexafluoro-2-butene content was 1.36 ml (0.83 w/v%), and the total of them was 230 ml.

The insect pest control agent of Example 4 contained HFO-1234ze, DME, and cis-1,1,1,4,4,4-hexafluoro-2-butene. The HFO-1234ze content was 125.68 ml, the DME content was 102.83 ml, the cis-1,1,1,4,4,4-hexafluoro-2-butene content was 1.50 ml (0.91 w/v%), and the total of them was 230 ml.

The insect pest control agent of Example 5 contained HFO-1234ze, DME, and cis-1,1,1,4,4,4-hexafluoro-2-butene. The HFO-1234ze content was 125.60 ml, the DME content was 102.76 ml, the cis-1,1,1,4,4,4-hexafluoro-2-butene content was 1.64 ml (1.00 w/v%), and the total of them was 230 ml.

The insect pest control agent of Example 6 contained HFO-1234ze, DME, and cis-1,1,1,4,4,4-hexafluoro-2-butene. The HFO-1234ze content was 121.98 ml, the DME content was 99.80 ml, the cis-1,1,1,4,4,4-hexafluoro-2-butene content was 8.21 ml (5.00 w/v%), and the total of them was 230 ml.

The insect pest control agent of Example 7 contained HFO-1234ze, DME, and cis-1,1,1,4,4,4-hexafluoro-2-butene. The HFO-1234ze content was 117.46 ml, the DME content was 96.11 ml, the cis-1,1,1,4,4,4-hexafluoro-2-butene content was 16.43 ml (10.00 w/v%), and the total of them was 230 ml.

In Table 1, an "open triangle" indicates a case where, compared to before spraying, there was not a significant difference in the movement speed of a test insect, and an abnormal motion was observed in the test insect, an "open circle" indicates a case where, compared to before spraying, there was a significant reduction in the movement speed of a test insect, and an "double circle" indicates a case where a test insect did not move its legs, etc., or did not move around. Note that the test was conducted five times for each of Comparative Example 1 and Examples 1-7.

As can be seen from Table 1, in Comparative Example 1, there were some insect pests 2 having the state indicated by the "open triangle" immediately after spraying, i.e., there was not a significant difference in the movement speed of these insect pests 2. In contrast, in Examples 1-7, there was no insect pest 2 having the state indicated by the "open triangle" immediately after spraying. That is, when cis-1,1,1,4,4,4-hexafluoro-2-butene adheres to an insect pest, the compound cis-1,1,1,4,4,4-hexafluoro-2-butene exhibits the activity reduction effect on that insect pest. The insect pest activity reduction effect of cis-1,1,1,4,4,4-hexafluoro-2-butene is a motor function reduction effect specific to cis-1,1,1,4,4,4-hexafluoro-2-butene, but not a cooling effect. It can be seen that the motor function reduction effect of cis-1,1,1,4,4,4-hexafluoro-2-butene was quickly observed in the test insects.

In Example 2, there was no insect pest 2 having the state indicated by the "open triangle" immediately after spraying or 10 seconds after spraying. Therefore, it can be seen that if the cis-1,1,1,4,4,4-hexafluoro-2-butene content is not smaller than 0.74 w/v%, then when the insect pest control agent adheres to the insect pest 2, a significantly high activity reduction effect is exhibited within 10 seconds after the adhesion. The cis-1,1,1,4,4,4-hexafluoro-2-butene content is particularly preferably not smaller than 0.83 w/v%. When the cis-1,1,1,4,4,4-hexafluoro-2-butene content was within that range, there were three insect pests 2 that did not move its legs, etc., immediately after spraying. The lower limit of the cis-1,1,1,4,4,4-hexafluoro-2-butene content is more preferably not smaller than 0.91 w/v%.

It can also be seen that the activity reduction effect on the insect pest 2 becomes more significant with an increase in the cis-1,1,1,4,4,4-hexafluoro-2-butene content. However, the amount of the chemical agent remaining on the flooring 3 after spraying increases with an increase in the cis-1,1,1,4,4,4-hexafluoro-2-butene content, resulting in a deterioration in cleanness. Therefore, the upper limit of the cis-1,1,1,4,4,4-hexafluoro-2-butene content is preferably not greater than 10 w/v%, more preferably not greater than 5 w/v%. In addition, the cost of the insect pest control agent can be reduced by adjusting the upper limit of the cis-1,1,1,4,4,4-hexafluoro-2-butene content to not greater than 10 w/v%.

### (Test Example 2)

As shown in Table 2, Test Example 2 was a test for investigating differences in efficacy on various insect pests between Comparative Example 1 and Example 2.

**Table 2**

| Test insect | Test No. | Evaluation | | Spraying time |
|---|---|---|---|---|
| | | Example 2 | Comparative Example 1 | |
| Fall webworm (adult) | 1 | ⊚ | ○ | 2 seconds |
| | 2 | ⊚ | ○ | |
| | 3 | ⊚ | ○ | |
| Shield bug (adult) | 1 | ⊚ | ⊚ | 3 seconds |
| | 2 | ⊚ | ○ | |
| | 3 | ⊚ | ○ | |
| Bedbug (adult) | 1 | ⊚ | ⊚ | 3 seconds |
| | 2 | ⊚ | ○ | |
| | 3 | ⊚ | ○ | |
| Pristomyrmex punctatus (adult) | 1 | ⊚ | ○ | 3 seconds |
| | 2 | ⊚ | ○ | |
| | 3 | ⊚ | Δ | |
| Joro spider (adult female) | 1 | ⊚ | ○ | 3 seconds |
| | 2 | ⊚ | ⊚ | |
| | 3 | ⊚ | ○ | |
| Centipede (adult female) | 1 | ⊚ | Δ | 4 seconds |
| | 2 | ○ | Δ | |
| | 3 | ○ | × | |

| | | | | |
|---|---|---|---|---|
| "Double circle": the activity reduction effect was very significantly observed "Open circle": the activity reduction effect was significantly observed "Open triangle": the activity reduction effect was not significantly observed "Cross": the activity reduction effect was not observed at all | | | | |

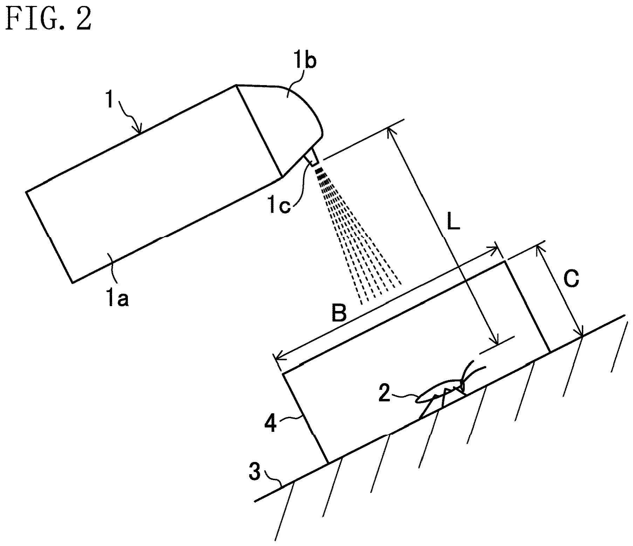

Testing was performed by a method shown in FIG. 2. Initially, an aerosol container 1 containing the insect pest control agent of Comparative Example 1, and an aerosol container 1 containing the insect pest control agent of Example 2, were prepared. An insect pest 2 that was to be tested was put on an inclined plane, with a cylindrical object 4 having open opposite ends being put on the plane around the insect pest 2. A single insect pest 2 was placed inside the cylindrical object 4. The insect pest 2 was allowed to freely move inside the cylindrical object 4. The cylindrical object 4 had an inner diameter B of 20 cm and a height of 20 cm. The aerosol container 1 was positioned diagonally above the insect pest 2, with a distance L between the open end of the nozzle 1c and the insect pest 2 being 60 cm. A state of the insect pest 2 was observed immediately after spraying. The time for which the insect pest control agent was sprayed, which is as shown in Table 2, was varied, depending on the type of an insect pest 2. The temperature of a room where the test was conducted was 23°C.

In Table 2, a "cross" indicates a case where the activity reduction effect was not observed at all, an "open triangle" indicates a case where the activity reduction effect was not significantly observed, an "open circle" indicates a case where the activity reduction effect was significantly observed, and a "double circle" indicates a case where the activity reduction effect was very significantly observed. Note that the test was conducted three times for each of Comparative Example 1 and Example 2.

As can be seen from Table 2, the insect pest control agent of Example 2 was effective to all types of insect pests 2, and the effect was very significant to the most of the insect pests 2. On the other hand, the insect pest control agent of Comparative Example 1 was not significantly or not at all effective to ants of the Pristomyrmex punctatus or centipedes.

The composition of Example 2 was effective to various insect pests. Therefore, it may be considered that the compositions of Examples 1 and 3-7 are similarly effective. Therefore, it can be seen that the insect pest control agent of this embodiment of the present invention has a high activity reduction effect on not only cockroaches, but also moths, shield bugs, lice, ants, spiders, and centipedes. In particular, even when the insect pest control agent was sprayed to moths only for as short as 2 seconds, the activity reduction effect was very high.

### (Test Example 3)

Test Example 3 was a test for verifying the efficacy of an insect pest control agent according to Example 8 whose propellant was LPG, and which did not contain a cooling CFC substitute.

**Table 3**

| Test insect | Test No. | Example 8 | Spraying time |
|---|---|---|---|
| Fall webworm (adult) | 1 | ⊚ | 2 seconds |
| | 2 | ⊚ | |
| | 3 | ⊚ | |
| Shield bug (adult) | 1 | ⊚ | 3 seconds |
| | 2 | ⊚ | |
| | 3 | ○ | |
| Bedbug (adult) | 1 | ⊚ | 3 seconds |
| | 2 | ⊚ | |
| | 3 | ⊚ | |
| Pristomyrmex punctatus (adult) | 1 | ⊚ | 3 seconds |
| | 2 | ○ | |
| | 3 | ○ | |
| Joro spider (adult female) | 1 | ⊚ | 3 seconds |
| | 2 | ⊚ | |
| | 3 | ○ | |
| Centipede (adult female) | 1 | ○ | 4 seconds |
| | 2 | ○ | |
| | 3 | ○ | |
| Smokybrown cockroach (adult female) | 1 | ○ | 4 seconds |
| | 2 | ○ | |
| | 3 | Δ | |

| | | | |
|---|---|---|---|
| "Double circle": the activity reduction effect was very significantly observed "Open circle": the activity reduction effect was significantly observed "Open triangle": the activity reduction effect was not significantly observed "Cross": the activity reduction effect was not observed at all | | | |

The test method, conditions, and evaluation were the same as those of Test Example 2. The insect pest control agent of Example 8 contained LPG as a propellant, and cis-1,1,1,4,4,4-hexafluoro-2-butene, and did not contain HFO-1234ze. The LPG (LPG0.28) content was 228.79 ml, the cis-1,1,1,4,4,4-hexafluoro-2-butene content was 1.21 ml (0.74 w/v%), and the total of them was 230 ml.

The cooling effect of LPG that is exhibited on the insect pest 2 when LPG adheres to the insect pest 2 is lower than that of DME. Therefore, it had been predicted that the activity reduction effect of Example 8 would be lower than those of Examples 1-7 in Test Examples 1 and 2. However, it was found that the insect pest control agent of Example 8 is effective to each type of insect pest 2, because cis-1,1,1,4,4,4-hexafluoro-2-butene has a high activity reduction effect. Since a sufficient activity reduction effect was obtained even when LPG, which has only a low cooling effect on the insect pest 2, was used as a propellant, the propellant is not essential. In particular, even when the insect pest control agent was sprayed to moths only for as short as 2 seconds, the activity reduction effect was very high.

It had also been predicted that the activity reduction effect of Example 8 would be lower than those of Examples 1-7 in Test Examples 1 and 2, because the insect pest control agent of Example 8 did not contain HFO-1234ze. However, it was found that the insect pest control agent of Example 8 is effective to each type of insect pest 2, because cis-1,1,1,4,4,4-hexafluoro-2-butene has a high activity reduction effect. Therefore, the cooling CFC substitute is not essential. That is, the insect pest control agent contains at least cis-1,1,1,4,4,4-hexafluoro-2-butene, and may not contain a cooling CFC substitute or a propellant. More preferably, the insect pest control agent contains a cooling CFC substitute and/or a propellant.

### (Test Example 4)

Test Example 4 was a test for verifying the efficacy of an insect pest control agent according to Example 9 that contained cis-1,1,1,4,4,4-hexafluoro-2-butene and HFO-1234ze, and did not contain LPG or dimethyl ether.

**Table 4**

| Test insect | Test No. | Comparative Example 2 | Example 9 | Spraying time |
|---|---|---|---|---|
| Fall webworm (adult) | 1 | ○ | ⊚ | 2 seconds |
| | 2 | ○ | ⊚ | |
| | 3 | ○ | ⊚ | |
| Shield bug (adult) | 1 | ○ | ○ | 3 seconds |
| | 2 | Δ | ⊚ | |
| | 3 | ○ | ⊚ | |
| Bedbug (adult) | 1 | ○ | ⊚ | 3 seconds |
| | 2 | Δ | ⊚ | |
| | 3 | ○ | ⊚ | |
| Pristomyrmex punctatus (adult) | 1 | Δ | ○ | 3 seconds |
| | 2 | Δ | ⊚ | |
| | 3 | ○ | ⊚ | |
| Joro spider (adult female) | 1 | Δ | ⊚ | 3 seconds |
| | 2 | Δ | ⊚ | |
| | 3 | ○ | ⊚ | |
| Centipede (adult female) | 1 | Δ | ○ | 4 seconds |
| | 2 | Δ | ○ | |
| | 3 | ○ | ○ | |
| Smokybrown cockroach (adult female) | 1 | Δ | ○ | 4 seconds |
| | 2 | Δ | ○ | |
| | 3 | ○ | ○ | |

| | | | | |
|---|---|---|---|---|
| "Double circle": the activity reduction effect was very significantly observed "Open circle": the activity reduction effect was significantly observed "Open triangle": the activity reduction effect was not significantly observed "Cross": the activity reduction effect was not observed at all | | | | |

The test method, conditions, and evaluation were the same as those of Test Example 2. In Example 9, a propellant, such as LPG or dimethyl ether, was not used, and the propelling effects of cis-1,1,1,4,4,4-hexafluoro-2-butene and HFO-1234ze were used to cause these components to adhere to the insect pest 2. The cis-1,1,1,4,4,4-hexafluoro-2-butene content was 1.21 ml (0.74 w/v%), the HFO-1234ze content was 228.79 ml, and the total of them was 230 ml. HFO-1234ze functions as a propellant and a cooling agent. Meanwhile, an insect pest control agent according to Comparative Example 2 contained only HFO-1234ze.

DME has a cooling effect on the insect pest 2 when adhering to the insect pest 2. It had been predicted that the activity reduction effect would decrease, because the insect pest control agent of Example 9 did not contain DME. However, it can be seen that the insect pest control agent of Example 9 is highly effective to each type of insect pest 2, because of the synergistic effect of the activity reduction effect of cis-1,1,1,4,4,4-hexafluoro-2-butene and the cooling effect of HFO-1234ze. Therefore, a propellant, such as LPG or dimethyl ether, is not essential. In particular, even when the insect pest control agent was sprayed to moths, lice, and spiders only for as short as 2-3 seconds, the activity reduction effect was very high.

In Examples 1-7 and 9, HFO-1234ze was contained. Alternatively, instead of HFO-1234ze, other cooling CFC substitutes, such as HFC-152a, HFC-134a, and HFO-1234yf, may be used to achieve a similar activity reduction effect, because these cooling CFC substitutes vaporize and remove a similar quantity of heat from an insect pest when adhering to that insect pest.

The above embodiments are considered in all respects as illustrative and not restrictive. All variations and modifications falling within the equivalency range of the appended claims are intended to be embraced therein.

### INDUSTRIAL APPLICABILITY

As described above, the insect pest control agent of the present invention is useful for control of insect pests, such as cockroaches.

### DESCRIPTION OF REFERENCE CHARACTERS

- 1: AEROSOL CONTAINER
- 1A: CONTAINER BODY
- 1B: SPRAY CAP
- 1C: NOZZLE

## Claims

1. An insect pest control agent for adhesion to an insect pest, comprising:
cis-1,1,1,4,4,4-hexafluoro-2-butene, **characterized in that** the content of cis-1,1,1,4,4,4-hexafluoro-2-butene in the insect pest control agent is not smaller than 0.74 w/v% and not greater than 10 w/v%.

2. The insect pest control agent of claim 1, further comprising:
a cooling CFC substitute for cooling an insect pest by vaporizing and removing heat from the insect pest.

3. The insect pest control agent of claim 1, further comprising:
a propellant,
wherein
the insect pest control agent is contained in an aerosol container.

4. The insect pest control agent of claim 3, wherein
the propellant is dimethyl ether.

## Patentansprüche

1. Insektenschädlingsbekämpfungsmittel zum Haften an einem Insektenschädling, umfassend:
Cis-1,1,1,4,4,4-hexafluor-2-buten, **dadurch gekennzeichnet, dass** der Gehalt an Cis-1,1,1,4,4,4-hexafluor-2-buten im Insektenschädlingsbekämpfungsmittel nicht kleiner als 0,74 Gew.-/Vol.-% und nicht größer als 10 Gew.-/Vol.-% ist.

2. Insektenschädlingsbekämpfungsmittel nach Anspruch 1, weiter umfassend:
einen kühlenden CFC-Ersatz, um einen Insektenschädling durch Verdampfen und Abführen von Wärme vom Insektenschädling zu kühlen.

3. Insektenschädlingsbekämpfungsmittel nach Anspruch 1, weiter umfassend:
ein Treibmittel, wobei
das Insektenschädlingsbekämpfungsmittel in einem Aerosolbehälter enthalten ist.

4. Insektenschädlingsbekämpfungsmittel nach Anspruch 3, wobei
das Treibmittel Dimethylether ist.

## Revendications

1. Agent de lutte contre les insectes nuisibles pour l'adhésion à un insecte nuisible, comprenant :
du cis-1,1,1,4,4,4-hexafluoro-2-butène,
**caractérisé en ce que**
la teneur en cis-1,1,1,4,4,4-hexafluoro-2-butène dans l'agent de lutte contre les insectes nuisibles n'est pas inférieure à 0,74% p/v et n'est pas supérieure à 10% p/v.

2. Agent de lutte contre les insectes nuisibles de la revendication 1, comprenant en outre :
un produit de remplacement de CFC ayant un effet refroidissant, pour refroidir un insecte nuisible par vaporisation et élimination de la chaleur de l'insecte nuisible.

3. Agent de lutte contre les insectes nuisibles de la revendication 1, comprenant en outre :
un agent propulseur,
dans lequel
l'agent de lutte contre les insectes nuisibles est contenu dans un récipient pour aérosol.

4. Agent de lutte contre les insectes nuisibles de la revendication 3, dans lequel
l'agent propulseur est l'éther diméthylique.
